# EUROPÄISCHE PATENTSCHRIFT

(11) **EP 0 402 697 B1**
(45) Veröffentlichungstag und Bekanntmachung des Hinweises auf die Patenterteilung: **16.02.1994**
(21) Anmeldenummer: 90110185.7
(22) Anmeldetag: 29.05.1990
(51) Int. Cl.: B27K 3/50

(54) **Mischung für den Holzschutz**
Mixture for preserving wood
Mixture pour la préservation de bois

(30) Priorität: 10.06.1989 DE 3918978
(43) Veröffentlichungstag der Anmeldung: 19.12.1990
(73) Patentinhaber: Dr. Wolman GmbH, D-76547 Sinzheim (DE)
(72) Erfinder: Goettsche, Reimer, Dr., D-7570 Baden-Baden 19 (DE); Borck, Hans-Volker, D-7570 Baden-Baden (DE); Reuther, Wolfgang, Dr., D-6900 Heidelberg (DE)
(74) Vertreter: Schweiss, Werner, Dr.

(56) Entgegenhaltungen:
- EP-A- 0 147 976
- DE-A- 3 539 412
- DE-A- 3 736 298
- DE-C- 2 656 747

## Beschreibung

Es ist bekannt Dimethylalkylamine, z.B. in Form von Salzen langkettiger Carbonsäuren, für den Holzschutz zu verwenden (EP-147 976).

Die fungizide Wirksamkeit von 4-[3-(4-tert.-butylphenyl)-2-methylpropyl]-2,6-(cis)-dimethylmorpholin (Fenpropimorph) ist bekannt (DE-26 56 747).

Es ist ferner bekannt, Dimethylalkylamin, Tridemorph, Fenpropimorph oder ihre Mischung, einen Emulgator und eine wasserunlösliche Säure oder ihr Salz als Holzschutzmittel zu verwenden (EP-A-0 370 371).

Es ist ferner bekannt, Dimethylalkylamin, eine wasserlösliche Säure, eine wasserunlösliche Säure und/oder 2-(Methoxycarbonylamino)-benzimidazol als Holzschutzmittel zu verwenden (DE-A-37 36 298).

Es wurde gefunden, daß Holzschutzmittel, die 0.5% bis 100% (gew.-%) einer Mischung aus
a) Fenpropimorph und
b) einer wasserunlöslichen organischen Säure im Gewichtsverhältnis a:b wie 5:1 bis 1:5, wobei die Mischung beim Verdünnen mit Wasser eine wäßrige Suspension mit einem pH-Wert unter 8 ergibt,
   A) außer der Mischung aus
      a) einem Dimethylalkylamin, N-Tridecyl-2,6-dimethylmorpholin, 4-[3-(4-tert.-Butylphenyl)-2-methyl-propyl]-2,6-cis-dimethylmorpholin oder ihrer Mischung,
      b) einem Emulgator und
      c) einer wasserunlöslichen Säure oder ihrem Salz, und
   B) außer der Mischung mit einer wasserlöslichen Säure,
enthalten, eine gute Wirkung gegen Holzschädlinge, insbesondere gegen holzzerstörende Pilze haben. Die Mittel können als Wirkstoffe zusätzlich Dimethylalkylamin enthalten.

Der Wirkstoff b kann z.B. eine wasserunlösliche organische Carbonsäure oder 8-Hydroxychinolin sein. Formulierungen und Zubereitungen enthalten je nach Anwendung 0,5 % bis 100 % (Gew.-%) der Wirkstoffmischung.

Die Anwendung erfolgt vorteilhaft in öliger Form, d.h. die Wirkstoffmischung wird in organischen Lösemitteln gegebenfalls unter Zusatz von Bindemitteln gelöst.

Das Mischungsverhältnis (Gewichtsverhältnis) zwischen Fenpropimorph und Dimethylalkylamin beträgt 5:1 bis 1:5.

Ein Dimethylalkylamin ist ein N,N-Dimethyl-N-alkylamin, dessen Alkylrest beispielsweise 6-20 C-Atome enthält. Bevorzugt werden Dimethylalkylamine mit 12 oder 14 C-Atomen im Alkylrest.

Neben den reinen Dimethylalkylaminen können auch Mischungen, z.B. aus Dimethyl-C₁₂-und Dimethyl-C₁₄-alkylamin d.h. Dimethyl-(C₁₂/C₁₄)-alkylamin, verwendet werden.

Eine wasserunlösliche organische Säure ist z.B. 8-Hydroxychinolin oder eine aliphatische oder aromatische Mono- oder Polycarbonsäure wie z.B. eine aliphatische, unverzweigte Monocarbonsäure mit 5 bis 20 C-Atomen wie Hexansäure, Heptansäure, Octansäure, Nonansäure, Decansäure oder eine aliphatische, verzweigte Monocarbonsäure mit 5 bis 20 C-Atomen wie 2-Ethylpentansäure, 2-Ethylhexansäure, 2-Ethylheptansäure, Isooctansäure, Isononansäure, Versaticsäure oder Neocarbonsäure (stärker verzweigte Monocarbonsäuren) oder
eine aliphatische Dicarbonsäure mit 5 bis 20 C-Atomen wie z.B. Sebacinsäure, Decandicarbonsäure oder
eine aromatische oder aromatisch/aliphatische Carbonsäure wie Naphthensäure, Benzoesäure.

Die Säuren können auch in Form ihrer Salze, z.B. als Dimethylalkylaminsalze, verwendet werden.

Es wird jeweils soviel Säure verwendet, daß eine wässerige Suspension (z.B. 10 Teile Wasser, 1 Teil Wirkstoffgemisch) einen pH-Wert unter pH 8, insbesondere unter 7,5 besitzt, z.B. pH-Wert 7,3 bis 4. Das Mischungsverhältnis der Wirkstoffe a zu b kann 5:1 bis 1:5, insbesondere 2:1 bis 1:1 Gewichtsteile betragen, immer unter der Voraussetzung, daß der pH-Wert der Mischung den oben genannten Werten entspricht.

Geeignete Lösungen enthalten beispielsweise (jeweils Gewichtsprozent)
1 bis 8 % Fenpropimorph
1 bis 5 % Organische Säure
bis zu 5 % Dimethylalkylamin
und als Rest auf 100 % ein organisches Lösungsmittel.

Die Anwendungsmengen der gebrauchsfertigen Lösungen (z.B. in Petroleum oder Mischungen aliphatischer und aromatischer Kohlenwasserstoffe) betragen bei Gehalten an Wirkstoffmischungen von z.B. 1,0 bis 10,0 % (Gew.-%) zwischen 80 bis 350 g/m² Holzoberfläche bei Streichen, Spritzen (Sprühen), Tauchen und Fluten je nach Gefährdung des Holzes durch Pilzbefall, Anwendungsbereich und -verfahren.

Ein besonderes effektiver Holzschutz wird durch groptechnische imprägnierverfahren, z.B. Vakuum-, Doppelvakuum- oder Druckverfahren erzielt. Die Konzentration der Wirkstoffmischungen in den Anwendungslösungen werden hierbei so eingestellt, daß z.B. 0,5 bis 10 kg/m³ an Mischung in den imprägnierbaren Holzanteil eingebracht werden.

Bei Holzwerkstoffen (Span-, Faser- und Sperrholzplatten) kann das Wirkstoffkonzentrat durch Zumischen zum Leim, durch direktes Besprühen der Späne oder Furniere eingebracht werden; die Anwendungskonzentrationen liegen z.B. in der Größenordnung von 0,2 bis 2,0 % auf Holz.

Zur Vergrößerung des Wirkstoffspektrums oder Erziehung besonderer Effekte können den Holzschutzformulierungen oder -konzentraten weitere Fungizide, Insektizide oder andere Wirkstoffe zugesetzt werden. Besonders günstige Mischungspartner sind z.B. die folgenden Verbindungen:
N-Tridecyl-2,6-dimethylmorpholin
Organozinnverbindungen, wie Tributylzinnoxid und Tributylzinnbenzoat Tris-N-(Cyclohexyldiazeniumdioxy)-Aluminium
N-(Cyclohexyldiazeniumdioxy)-Tributylzinn
Methylenbisthiocyanat
Dialylmethylamine und ihre Salze
Trialylamine und ihre Salze
Chlorierte Phenole, wie Tetra- und Pentachlorphenol
Tetrachlorisophthalsäure-dinitril
N-Cyclohexyl-N-methoxy-2,5-dimethyl-furan-3-carbonsäureamid
N-Dimethyl-N'-phenyl-(N-fluarmethylthio)-sulfamid
N,N-Dimethyl-N'-toluyl-(N-fluormethylthio)-sulfamid
Benzimidazol-2-carbaminsäure-methylester
2-Thiocyanomethyl-thiobenzothiazol
Kupfernaphthenat
2-Jodbenzoesäureanilid
1-(1',2',4'-Triazolyl-1')-(1-(4'-chlorphenoxy))-3,3-dimethylbutan-2-on
1-(1',2',4'-Triazolyl-1')-(1-(4'-chlorphenoxy))-3,3-dimethylbutan-2-ol
Hexachlorcyclohexan
0,0-Diethyl-dithio-phosphoryl-methyl-6-chlorbenoxazolon
2-(1,3-Thiazol-4-yl)-benzimidazol
N-Trichlormethylthio-3,6,7,8-tetrahydrophthalimid
N-(1,1,2,2-Tetrachlorethylthio)-3,6,7,8-tetrahydrophthalimid
N-Trichlormethylthiophthalimid
2-N-Octyl-4-Isothiazolin-3-on und substituierte Verbindungen
3-Jodo-2-propymylbutylcarbamat
1,2-Benzisothiazolin-3-on
1-(4-Chlorphenoxy)3,3-dimethyl-1-(1H-1,2,4-triazol-1-yl)-butan-2-on
1-(4-Chlorphenoxy)3,3-dimethyl-1-(1H-1,2,3-triazol-2-yl)-butan-2-ol
0,0-Dimethyl-S-(2-methylamino-2-oxoethyl)-dithiophosphat
0,0-Diethyl-0-(3,5,6-trichlor-2-pyridyl)-thiosphospat
0,0-Dimethyl-S-(N-phthalimido)-methyldithiophosphat
0,0-Diethyl-0.(α-cyanbenzyliden-amino)-thiophosphat
6,7,8,9,10-Hexachlor-1,5,5a,6,9,9a-hexahydro-6,9-methano-2,3,4-benozoedioxothiepien-3-oxid
2-sek.-Butyl-phenyl-N-methylcarbamat
2-i-Propoxyphenyl-N-methyl-carbamat
N-Methyl-1-naphthyl-carbamat
Norbornen-dimethanohexa-chlorcyclosulfit
1-(4-Chlorphenyl)-3-(2,6-di-fluorbenzoyl)-harnstoff
Quatäre Ammonium- und/oder Phosphoniumverbindungen
synthetische Pyrethroide, wie
(+)-3-(2,2-Dichlorvinyl-2,2-dimethyl)-cyclopropan-1-carbonsäure-3-phenoxybenzylester
3-(2,2-Dichlorvinyl-2,2-dimethyl)-cyclopropan-1-carbonsäure-α-Cyan-3,3-phenoxybenzylester
3-(2,2-Dibromvinyl-2,2-dimethyl)-α-cyano-m-phenoxybenzyl-1R,3R)-cyclopropan-carboxylat
α-Cyano-3-phenoxybenzyl-isopropyl-2,4-chlorphenylacetat.

Den Holzschutzmitteln können Bindemittel, z.B. öllösliche oder wasserverdünnbare Alkydharze, bei Grundierungen (ca. 2 bis 10 % Festharz), Lasuren (ca. 10 bis 25 % Festharz), anorganische oder organische Pigmentzubereitungen, wasser- und öllösliche Farbstoffe, "waterrepellents" wie Metallstearate oder Wachse bzw. Hilfsmittel, wie z.B. Trockner, Netzmittel, Eindringhilfsmittel, zugesetzt werden.

Die Erfindung wird an folgenden Beispielen erläutert:

### Vergleichsbeispiel A (nicht erfindungsgemäß)

5,0 % Dimethyl-(C₁₂/C₁₄)-amin
2,5 % 2-Ethylhexansäure
92,5 % Mischung aliphatischer und aromatischer Kohlenwasserstoffe (Mischungsverhältnis 4:1, Siedebereich 180 bis 220°C)
Grenzwertbestimmung der Wirkung gegen holzzerstörende Pilze.

Das Verfahren dient zur Bestimung der vorbeugenden Wirkung von Holzschutzmitteln gegen holzzerstörende Pilze.

Gleichartige, bei 103°C bis zur Gewichtskonstanz getrocknete Holzklötzchen (5 x 2,5 x 1,5 cm) werden mit abgestuften Mengen des zu prüfenden Holzschutzmittels vollgetränkt, getrocknet, mit Wasser ausgewaschen (Auswaschung der Wirkstoffmischung aus dem Holz) und in Glasschalen dem Angriff von Kulturen holzzerstörender Pilze ausgesetzt. Als Nährboden für die Pilze dient Malzagar (enthaltend 4 % Malzextrakt). Die Wirkstoffe werden in Isopropanol gelöst. Die durch den Pilzbefall bewirkte Zerstörung des Holzes wird durch den Gewichtsverlust der Probehölzer erfaßt; ein Gewichtsverlust von 2 % und mehr wird als Holzzerstörung gewertet.

Angegeben wird eine untere Wirkstoffkonzentration, bei der das Holz gerade beginnt zerstört zu werden und eine obere Wirkstoffkonzentration, bei der keine Holzzerstörung zu erkennen ist, somit ein vollständiger Holzschutz erreicht ist. Für die Bewertung eines Holzschutzmittels in der Praxis ist immer von der oberen Wirkstoffkonzentration nach Auswaschung auszugehen.

Grenzwertbestimmung der Wirkung gegen holzzerstörende Pilze nach Auswaschung (in kg Wirkstoffmischung je m³ Holz).

| | |
|---|---|
| Coniophora puteana | 32,6 bis 51,8 kg/m³ |
| Poria monticola | 31,5 bis 52,1 kg/m³ |

### Anstrichversuche

Stäbe 500 x 30 x 30 mm (Jahresringverlauf ca. 45°) wurden auf einer Seite mit 100 bzw. 150 g/m² der Lösung angestrichen. Nach 4 Wochen wurde von der angestrichenen Stabseite eine 5 mm dicke Latte abgesägt, daraus Prüfklötzchen, Abmessung 30 x 30 x 5 mm, geschnitten, wiederum 4 Wochen gelagert und dann in Glasschalen mit den Prüfpilzen Coniophora puteana bzw. Poria monticola (3 Parallelversuche) gelegt.

Nach 8 Wochen Prüfzeit (ca. 28°C) wurden die Klötzchen auf Pilzbewuchs bzw. Pilzangriff untersucht:

### Anstrichmengen: (in g Wirkstoffmischung je m² Holz)

100 g/m² bzw. 150 g/m² - Lösung A:
- Coniophora puteana:: Klötzchen überwachsen und angegriffen
- Poria monticola :: Klötzchen überwachsen und angegriffen

### Vergleichsbeispiel B (nicht erfindungsgemäß)

5 % Fenpropimorph
95 % Mischung aliphatischer und aromatischer Kohlenwasserstoffe (4:1 Mischungsverhältnis, Siedebereich 180 bis 220°C)

### Grenzwerte gegenüber Basidiomyceten nach Auswaschung

| | |
|---|---|
| Coniophora puteana | 33,0 bis 52,1 kg/m³ |
| Poria monticola | 13,8 bis 21,4 kg/m³ |

### Anstrichversuche

### Anstrichmenge:

100 g/m² - Lösung B
- Coniophora puteana:: Klötzchen überwachsen und angegriffen
- Poria monticola :: Klötzchen überwachsen und angegriffen

150 g/m²
- Coniophora puteana:: Klötzchen teilweise überwachsen, stellenweise Angriffe
- Poria monticola :: Klötzchen teilweise überwachsen, stellenweise leichte Angriffe

### Erfindungsgemäße Beispiele

### Beispiel 1

5,0 % Fenpropimorph
2,5 % 2-Ethylhexansäure
92,5 % Mischung aliphatischer und aromatischer Kohlenwasserstoffe (4:1 Mischungsverhältnis, Siedebereich 180 bis 220°C)

### Grenzwerte gegenüber Basidiomyceten nach Auswaschung

| | |
|---|---|
| Coniophora puteana | 21,9 bis 33,1 kg/m³ |
| Poria monticola | 8,4 bis 13.3 kg/m³ |

### Anstrichversuche

### Anstrichmenge:

100 g/m² - Lösung 1
- Coniophora puteana:: Klötzchen nicht überwachsen, kein Angriff
- Poria monticola :: Klötzchen nicht überwachsen, kein Angriff

### Anstrichmenge:

150 g/m² - Lösung 1
- Coniophora puteana:: Klötzchen nicht überwachsen, kein Angriff
- Poria monticola :: Klötzchen nicht überwachsen, kein Angriff

### Beispiel 2

3 % Dimethyl-(C₁₂/C₁₄)alkyl-amin
2 % Fenpropimorph
2 % 2-Ethylhexansäure
93 % Mischung aliphatischer und aromatischer Kohlenwasserstoffe (4:1 Mischungsverhältnis, Siedebereich 180 bis 220°C)

### Gegenwerte gegen Basidiomyceten nach Auswaschung

| | |
|---|---|
| Coniophora puteana | 13,1 bis 21,5 kg/m³ |
| Poria monticola | 13,3 bis 20,6 kg/m³ |

### Anstrichversuche

100g/m² - Lösung 2
- Coniophora Puteana:: 1 Klötzchen von 3 Klötzchen an einer Stelle überwachsen, leichter Angriff; 2 Klötzchen kein Angriff
- Poria monticola :: Klötzchen nicht überwachsen, kein Agriff

### Beispiel 3

3 % Dimethyl-(C₁₂/C₁₄)alkyl-amin
2 % Fenpropimorph
3 % Isooctansäure
92 % Mischung aliphatischer und aromatischer Kohlenwasserstoffe (4:1 Mischungsverhältnis, Siedebereich 180 bis 220°C)

### Grenzwerte gegenüber Basidiomyceten nach Auswaschung

| | |
|---|---|
| Coniphora puteana | 13,5 bis 22,0 kg/m³ |
| Poria monticola | 13,1 bis 20,9 kg/m³ |

### Anstrichversuche

### Anstrichmenge:

100 g/m² - Lösung 3
- Coniophora puteana:: Klötzchen stellenweise überwachsen, kein Angriff
- Poria monticola :: Klötzchen nicht bewachsen, kein Angriff

### Anstrichmenge:

150 g/m² - Lösung 3
- Coniophora puteana:: Klötzchen nicht bewachsen, kein Angriff
- Poria monticola :: Klötzchen nicht bewachsen, kein Angriff

### Beispiel 4

3,0 % Dimethyl-(C₁₂/C₁₄)alkyl-amin
2,0 % Fenpropimorph
3,5 % Neodecansäure
91,5 % Mischung aliphatischer und aromatischer Kohlenwasserstoffe (4:1 Mischungsverhältnis, Siedebereich 180 bis 220°C)

### Grenzwerte gegenüber Basidiomyceten nach Auswaschung

| | |
|---|---|
| Coniophora puteana | 13,4 bis 22,0 kg/m³ |
| Poria monticola | 8,5 bis 13,2 kg/m³ |

### Anstrichversuche

### Anstrichmenge:

100 g/m² - Lösung 4
- Coniophora puteana:: 1 Klötzchen von 3 geringfügig überwachsen, kein Angriff, 2 Klötzchen nicht bewachsen
- Poria monticola :: Klötzchen nicht überwachsen, kein Angriff

### Anstrichmenge:

150 g/m² - Lösung 4
- Coniophora puteana:: Klötzchen nicht überwachsen, kein Angriff
- Poria monticola :: Klötzchen nicht überwachsen, kein Angriff

### Beispiel 5

3,0 % Dimethyl-(C₁₂/C₁₄)-amin
2,0 % Fenpropimorph
2,5 % 8-Hydroxychinolin
92,5 % Mischung aliphatischer und aromatischer Kohlenwasserstoffe (4:1 Mischungsverhältnis, Siedebereich 180 bis 220°C)

### Grenzwerte gegenüber Basidiomyceten nach Auswaschung

| | |
|---|---|
| Coniophora puteana | 13,2 bis 21,3 kg/m³ |
| Poria monticola | 8,6 bis 13,1 kg/m³ |

### Anstrichversuche

### Anstrichmenge:

100 g/m² - Lösung 5
- Coniophora puteana:: 1 Klötzchen von 3 geringfügig überwachsen, kein Angriff, 2 Klötzchen nicht bewachsen
- Poria monticola :: Klötzchen nicht überwachsen, kein Angriff

### Anstrichmenge:

150 g/m² - Lösung 5
- Coniophora puteana:: Klötzchen nicht überwachsen, kein Angriff
- Poria monticola :: Klötzchen nicht überwachsen, kein Angriff

## Patentansprüche

1. Mischung für den Holzschutz, enthaltend 0.5% bis 100% (gew.-%) einer Wirkstoffmischung enthaltend
a) 4-[3-(4-tert.-Butylphenyl)-2-methyl-propyl]-2,6-cis-dimethylmorpholin und
b) eine wasserunlösliche organische Säure im Gewichtsverhältnis a:b wie 5:1 bis 1:5, wobei das Wirkstoffgemisch beim Verdünnen mit Nasser eine wäßrige Suspension mit einem pH-Wert unter 8 ergibt,
A) außer der Mischung aus
a) einem Dimethylalkylamin, N-Tridecyl-2,6-dimethylmorpholin, 4-[-3-(4-tert.-Butylphenyl)-2-methyl-propyl]-2,6-cis-dimethylmorpholin oder ihrer Mischung,
b) einem Emulgator und
c) einer wasserunlöslichen Säure oder ihrem Salz, und
B) außer der Mischung mit einer wasserlöslichen Säure.

2. Mischung gemäß Anspruch 1, enthaltend als Wirkstoff b eine wasserunlösliche organische Carbonsäure.

3. Mischung gemäß Anspruch 1, enthaltend als Wirkstoff b die Verbindung 8-Hydroxychinolin.

4. Mischung gemäß Anspruch 1, enthaltend zusätzlich ein Dimethylalkylamin.

5. Mischung gemäß Anspruch 1, enthaltend zusätzlich eine Mischung aliphatischer und aromatischer Kohlenwasserstoffe.

6. Mischung gemäß Anspruch 1, enthaltend als Wirkstoff a eine Mischung aus 4-[3-(4-tert.-Butylphenyl)-2-methyl-propyl]-2,6-cis-dimethylmorpholin und Dimethylalkylamin im Gewichtsverhältnis 5:1 bis 1:5.

7. Verfahren zum Schutz von Holz, dadurch gekennzeichnet, daß man das Holz mit einer Mischung gemäß Anspruch 1 behandelt.

8. Verwendung einer Mischung gemäß Anspruch 1 zum Schutz von Holz gegen Pilzbefall.

## Claims

1. A mixture for the preservation of wood, containing 0.5%-100% (% by weight) of an active compound mixture containing
a) 4-[3-(4-tert-butylphenyl)-2-methyl-propyl]-2,6-cis-dimethylmorpholine and
b) a water-insoluble organic acid in a weight ratio a:b such as 5:1-1:5, the active compound mixture on dilution with water yielding an aqueous suspension having a pH below 8,
A) except for a mixture of
a) a dimethylalkylamine, N-tridecyl-2,6-dimethylmorpholine, 4-[3-(4-tert-butylphenyl)-2-methylpropyl]-2,6-cis-dimethylmorpholine or a mixture thereof,
b) an emulsifier and
c) a water-insoluble acid or its salt, and
B) except for a mixture with a water-soluble acid.

2. A mixture as claimed in claim 1, containing a water-insoluble organic carboxylic acid as active compound b.

3. A mixture as claimed in claim 1, containing the compound 8-hydroxyquinoline as active compound b.

4. A mixture as claimed in claim 1, additionally containing a dimethylalkylamine.

5. A mixture as claimed in claim 1, additionally containing a mixture of aliphatic and aromatic hydrocarbons.

6. A mixture as claimed in claim 1, containing a mixture of 4-[3-(4-tert-butylphenyl)-2-methylpropyl]-2,6-cis-dimethylmorpholine and dimethylalkylamine in the weight ratio 5:1-1:5 as active compound a.

7. A process for preserving wood, which comprises treating the wood with a mixture as claimed in claim 1.

8. The use of a mixture as claimed in claim 1 for protecting wood against fungal attack.

## Revendications

1. Mélange pour la protection du bois, contenant 0,5 % à 100 % en poids d'un mélange de matières actives contenant
a) 4-[3-(4-tert-butylphényl)-2-méthyl-propyl]-2,6-cis-diméthyl-morpholine
b) un acide organique insoluble dans l'eau dans une proportion en poids a/b telle que 5/1 à 1/5, le mélange de matières actives donnant, par dilution avec de l'eau, une suspension d'un pH inférieur à 8
A) à l'exception du mélange de
a) une diméthylalkylamine, N-tridécyl-2,6-diméthylmorpholine, 4-[-3-(4-tert-butylphényl)-2-méthyl-propyl]-2,6-cis-diméthyl-morpholine ou leur mélange
b) un émulsifiant et
c) un acide insoluble dans l'eau ou ses sels, et
B) à l'exception du mélange avec un acide soluble dans l'eau.

2. Mélange selon la revendication 1 contenant comme matière b un acide carboxylique organique insoluble dans l'eau

3. Mélange selon la revendication 1 contenant comme matière b le composé 8-hydroxyquinoline.

4. Mélange selon la revendication 1, contenant additionnellement une diméthylalkylamine.

5. Mélange selon la revendication 1 contenant additionnellement un mélange d'hydrocarbures alphatiques et aromatiques.

6. Mélange selon la revendication 1 contenant comme produit a un mélange de 4-[3-(4-tert-butylphényl)-2-méthyl-propyl]-2,6-cis-diméthylmorpholine et diméthylalkylamine dans un rapport en poids de 5/1 à 1/5.

7. Procédé pour la protection du bois, caractérisé par le fait qu'on traite le bois avec un mélange selon la revendication 1.

8. Utilisation d'un mélange selon la revendication 1, pour protéger du bois contre une attaque par champignons.
